# EUROPEAN PATENT APPLICATION

(11) **EP 2 452 846 A1**
(43) Date of publication of application: **16.05.2012**
(21) Application number: 10191000.8
(22) Date of filing: 12.11.2010
(51) Int. Cl.: B60K 17/346, F16H 48/00, F16H 48/20

(54) **Differential device with controllable torque distribution**

(71) Applicant: Aristotle University of Thessaloniki, 54124 Thessaloniki (GR); Michailidis, Atahnasios, 54624 Thessaloniki (GR); Nerantzis, Ioannis, 54624 Thessaloniki (GR)
(72) Inventor: Michailidis, Athanasios, 54624, Thessaloniki (GR); Nerantzis, Ioannis, 54624, Thessaloniki (GR)
(74) Representative: Petsis, Christos

(57) **Abstract**

The proposed invention is related to differential device with controllable torque distribution by a control system which takes into account compares the steering wheel angle and the yaw rate of a vehicle and determines the torque distribution to the driving wheels that is required in order to improve the driving behavior and vehicle handling. When no torque is being imposed by the control system to the driveshafts, the new differential device operates as an open differential and no energy is either produced or consumed. During the imposition of higher torque amount to the internal wheel, energy is produced and stored and the behavior of the new differential device is similar to the limited slip differentials. Furthermore, the new differential device gives the option of imposing larger torque amounts to the external wheel. During this operation the stored energy is consumed.

## Description

### Field of the invention

The present invention is related to differential units featuring a controllable torque distribution that are used in road vehicles for the improvement of driving behavior and vehicle handling.

### Background of the invention

During the last decades, various concepts have been developed to imposing yaw torque around the vertical axis of vehicles. These concepts either replace or supplement the regular differential units, since they provide the option of distributing the driving torque to the internal and external wheels when cornering, so that the magnitudes of the longitudinal forces applied on the wheels are not equal. If the force magnitude on the faster rotating wheel, i.e. the external one, is lower than that on the slower rotating wheel, i.e. the internal one, as in the case of locking or limited slip differential, then the resulting torque around the vertical axis has the opposite direction compared to the vehicle rotation during cornering. Thus, the vehicle understeers.

The European patent application EP 1997665 A1 discloses various design variations of a system with clutches/brakes. The torque distribution is achieved by varying the friction force in the properly selected clutches/brakes depending on the desired distribution. With this system, it is possible to achieve higher forces on the internal wheel and lower forces on the external wheel and vice versa. In the first case, the vehicle tends to understeer due to the applied torque, while in the second case, it tends to oversteer.

In patent applications US 20070021282 A1, US 20050266953 A1, EP 0841206 A2, EP 0575151 A1, US 005454762 A and GB 2213443 A, design configurations similar to that of EP 1997665 A1 are disclosed. In all these layouts, clutches and/or friction brakes are being used.

CA 2607040 A1 discloses a system that includes at least one rotating electric machine with the option to operate either as generator or motor regardless the design configurations proposed. A suitable electric circuit allows for the storage of electric energy when the machine operates as generator, while the same circuit provides the energy that is required for the machine operating as motor. By controlling the torque applied on the shaft of the electric machine, the torque distribution to the two output shafts could be determined.

### Prior Art

The state of the art in differential units with controllable torque distribution includes various machine elements that induce losses of energy. In systems that include clutches/friction brakes, clearly a part of the mechanical energy is transformed to heat on the friction surfaces. The systems that include rotating electric machines transform part of the mechanical energy to electrical and vise versa during their operation circle resulting in that they are more energy efficient. In the design configurations proposed so far, rotating contacts are being used - regardless of the type of electric machine - in order to transfer electric power to the stationary part of the machine. The main disadvantages of the use of rotating contacts to transfer electric power are the limited lifetime of these elements and the induced power losses.

### Aim of the invention

The present invention aims at remedying the drawbacks set out above. Therefore, the present invention aims at solving the problem of the control of torque distribution to the driving wheels of a vehicle by using neither clutches/friction brakes nor rotating contacts, so as to reduce energy loss.

### Summary of the invention

There is thus proposed according to the invention a differential device with controllable torque distribution comprising an input shaft, a regulation shaft, two output shafts, which is remarkable in its capability of distributing different torque amounts to the two output shafts, depending on the torque that is applied to the regulation shaft.

Thus, according to the invention configuration, this is achieved with the combination of two similar geartrains, each one including said three shafts: an input, an output and a regulation shaft. The input shafts are connected together and they constitute the system input. The regulation shafts are connected via an inversion mechanism so that their speeds have opposite directions, resulting in that the output shafts rotate similarly to a differential unit. The regulation shaft of the system is connected to the intermediary bevel gear of the inversion mechanism. When the regulation shaft rotates, one of the geartrains has a higher transmission ratio compared to the other one, while when it rotates at the opposite direction, the ratios are inverted. Thus the speed difference at the output shafts depends on the direction and the rotational velocity of the regulation shaft. When the regulation shaft is at rest, the two output shafts have the same rotational speed. When torque is applied on the regulation shaft, then the torque distribution on the output shafts changes. When no torque is applied on the regulation shaft, then the system distributes torque equally to the output shafts.

According to a further embodiment of the differential device according to the invention, the regulation shaft is connected with an electric machine capable to operate as a motor and generator, which can apply a torque of suitable direction and magnitude to the regulation shaft. The layout of the differential device is such that it allows the stationary part of the electric machine being thus connected with motionless elements, while the use of rotating contacts is not required for the power transmission from and to the electric machine. So, the characteristic advantage of the invention is that the location of the regulation shaft allows its connection with a rotating electric machine of which the stationary part is mounted on the case of the system. Thus, no use of rotating contacts is being made to transmit power to the electric machine.

According to a yet further embodiment of the differential device according to the invention, it includes an automatic control circuit comprising a set of steering wheel angle and yaw rate sensors, a control device and an electric energy storage device for the control of the electric machine that determines the required torque to the regulation shaft.

According to a still further embodiment of the differential device according to the invention, its layout is symmetric regarding the connections of the output shafts with the input and regulation shaft, resulting in that the distribution of torque is substantially uniform for both clockwise and counterclockwise course.

A further advantage of the proposed layout thus consists in its symmetry. Indeed, this means that when the vehicle moves in a straight line course, there is no need to apply torque to the regulation shaft in order to achieve equal torque distribution to the output shafts. Therefore, in the case of malfunction of the electric machine/control circuit, the proposed differential unit operates as an open differential, thus ensuring the system's safety, which yields to an additional embodiment of the differential device, according to the invention in that it can operate as an open differential unit in case of malfunction of the electric machine/control circuit, since when no torque is applied to the regulation shaft, equal amounts of torque are distributed to the output shafts.

The technical issue that is solved with the present invention is the control of torque distribution to the driving wheels of a vehicle by using neither clutches/friction brakes nor rotating contacts, thereby reducing thus energy loss.

According to a specific embodiment of the differential device according to the invention, its layout includes solely toothed wheels resp. gears for the power transmission between the shafts. Furthermore, it includes an electric machine and an electric energy storage unit, the combination of which gives the option of exploitation of the energy that is produced when the electric machine operates as a generator.

To summarize, the proposed invention provides a differential device with controllable torque distribution including a control system, which compares the steering wheel angle and the yaw rate of a vehicle and determines the torque distribution to the driving wheels in order to improve the driving behavior and vehicle handling. When no torque is being imposed by the control system to the drive shafts, the new differential unit operates as an open differential and no energy is either produced or consumed. During the imposition of higher torque amount to the internal wheel, energy is produced and stored and the behavior of the new differential unit is similar to the limited slip differentials. Furthermore, the new differential unit gives the option of imposing larger torque amounts to the external wheel. During this operation, the stored energy is consumed.

### Brief description of the drawings

Two alternative design implementations of the invention are set out more in detail in the description with reference to the attached drawings:
Figure 1 is a diagrammatic representation of the principle of operation of a system as proposed according to the invention regardless of the geartrains that are used.
Figure 2 is a sketch of a sectional view of a differential unit according to the invention that includes the elements that are essential in order to demonstrate the principle of operation of the present invention.
Figure 3 shows a spatial variation of the differential unit shown in figure 2 that, however, has precisely the same attributes.
Figure 4 shows a sketch of the top view of a vehicle that bears said differential unit, in order to show how the system according to the invention is connected to the vehicle's powertrain.
Figures 5, 6 and 7 show the power flow for all the possible cases of operation of the differential unit proposed according to the invention.

### Description

The same reference numbers are used for designating common or alternative parts and elements in the figures.

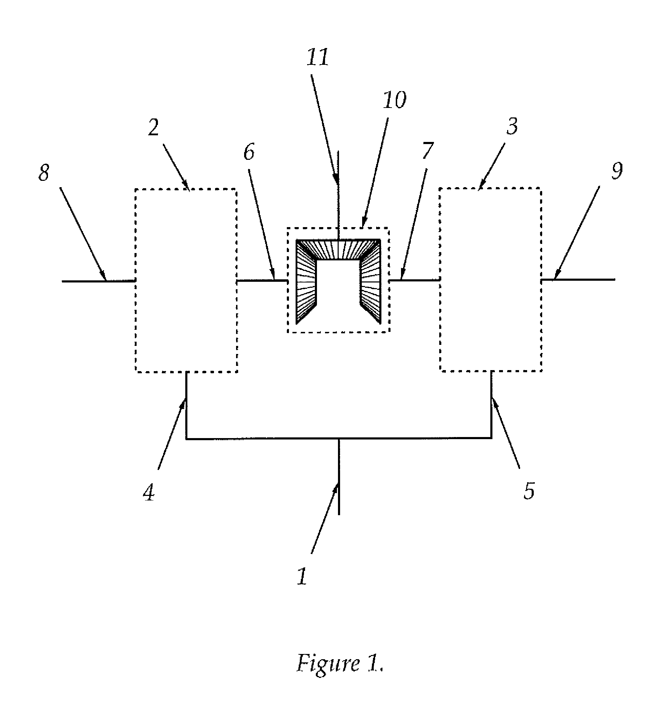

In figure 1, an input shaft 1 is connected to further input shafts 4 and 5 of two geartrains 2 and 3, that are substantially identical. Output shafts 8 and 9 of gearboxes are connected via drive shafts to a set of wheels of a vehicle. If shafts 6 and 7 are regarded as stationary, the geartrains have the same transmission ratio. When the shafts 6 and 7 rotate, the transmission ratio of the gearboxes increases, while when they rotate in the opposite direction, it decreases. The shafts 6 and 7 are designated as regulation shafts of the gearboxes and they are connected via an inversion mechanism 10 to the regulation shaft 11 of the system. Thus, when the regulation shaft rotates, the transmission ratio of one geartrain increases while that of the other geartrain decreases, thus resulting in that the system operates as a differential unit.

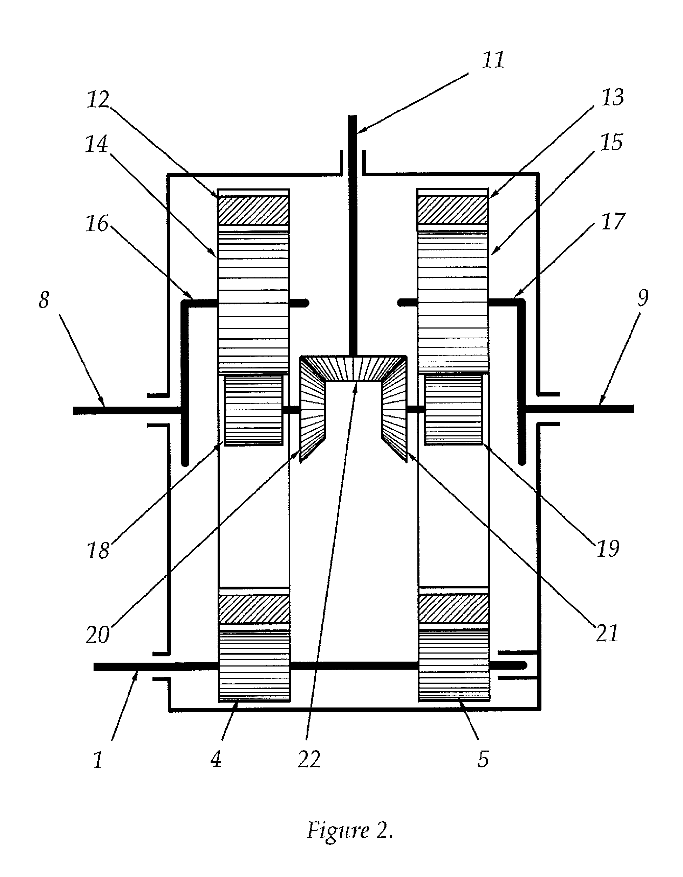

In figure 2, the input shaft 1 of the differential unit has one free end where the output shaft of the vehicle's transmission gearbox is connected. The gears 4 and 5, which are built on the input shaft, transmit motion to ring-gears 12 and 13 of the two planetary systems. These ring gears have external teeth in order to engage with the gears of the input shaft 1 and internal teeth in order to engage with planets 14 and 15. The latter drive a pair of carriers 16 and 17 respectively. The free ends 8 and 9 of the carriers are connected to the driveshafts in order to drive the wheels of the vehicle. A pair of internal sun-gears 18 and 19 of the planetary systems are arranged to cooperate with planets 14 and 15, by being therewith and they are connected with bevel gears 20 and 21.

The latter are engaged with an intermediary bevel gear 22, which is built on the regulation shaft 11.

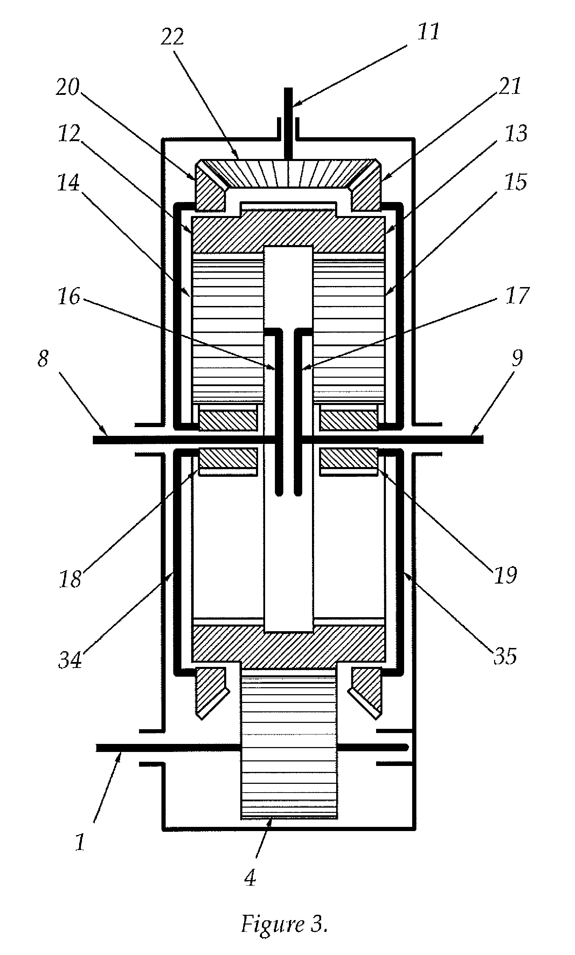

Figure 3 shows a variation of the same mechanism. The input shaft has only one gear 4 which drives the ring-gears 12 and 13 that are manufactured in one piece. The planet groups 14 and 15 are engaged with the internal teeth of the ring-gears 12 and 13 and they are connected with the carriers 16 and 17. In this design, the carrier shafts pass through the internal sun-gears 18 and 19 of the planetary systems so that the free ends 8 and 9 are connected with the vehicle's driveshafts. The internal sun-gears 18 and 19 are built on a pair of disks 34, 35 that bear the bevel gears 20 and 21 respectively. The bevel gears 20 and 21 are engaged with the intermediary bevel gear 22 that is arranged mounted on the regulation shaft 11.

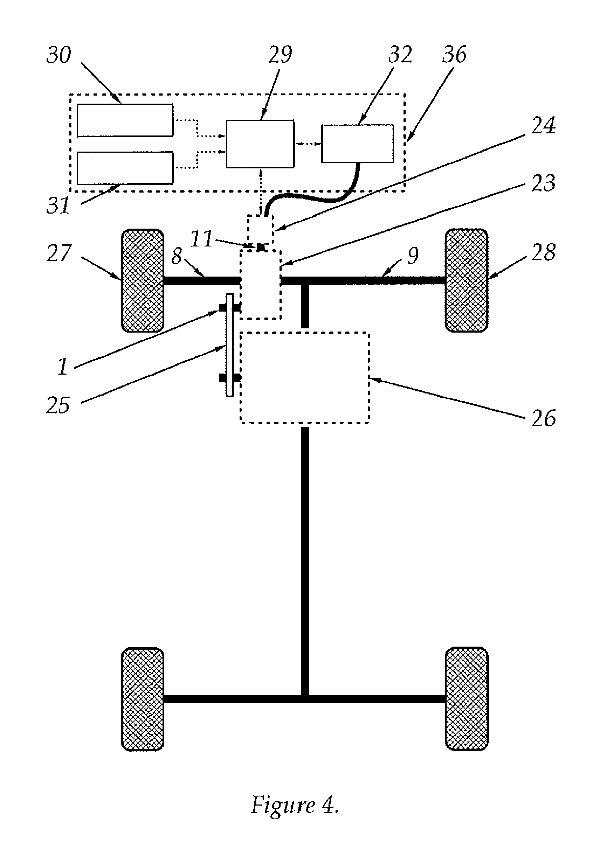

Figure 4 depicts the top view of a vehicle in which power is transmitted from the engine-gearbox assembly 26 assembly to the drive wheels 27 and 28 via the differential unit 23, in which the torque distribution is controllable.

The latter is designed according to figures 1, 2 and 3. The free end of the regulation shaft 11 is connected to a direct current rotating electric machine 24. The free end of the input shaft 1 is actively connected to the output shaft of the engine-gearbox 26 assembly of the vehicle. The respective connection 25 can be through a chain, a gearbox, a belt or even some kind of direct shaft-to-shaft connection. The free ends 8 and 9 as defined in figures 2 and 3, are connected to the drive wheels 27 and 28 of the vehicle. There is provided a control unit 29 that determines the operation of the electric machine 24. The control unit 29 also determines the torque's magnitude and direction that the electric machine 24 needs to apply by following a suitable control algorithm, which depends on the signal that it accepts from a steering wheel angle sensor 30 and a yaw rate sensor 31 of the vehicle.

Three modes of operation of the electric machine exist. The first one is the neutral condition at which no voltage is applied to the machine. In this case no torque is produced even when rotating, while no electric energy is being either produced or consumed. The second mode of operation refers to torque with opposite direction to that of the machine's rotation. In this case, electric energy is produced and the electric machine operates as a generator. Finally, the third mode of operation refers to torque with the same direction as the rotation of the electric machine. In this case electric energy is consumed and mechanical work is attributed, which means that the electric machine operates as a motor. The battery 32 serves the needs of temporary electric energy storage that is required for the operation of the electric machine. Clearly, it is possible to scale the applied torque on the shaft of the electric machine with suitable scaling of the applied voltage.

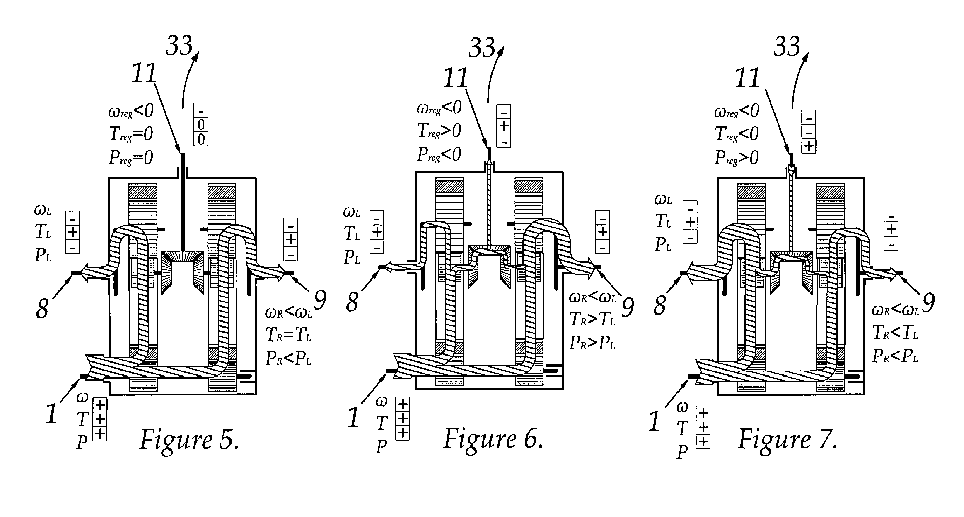

In figures 5, 6 and 7, the power flow is presented for the three operating conditions set out above of the electric machine for the proposed differential unit layout according to figure 2. In the three boxes in vertical arrangement next to each shaft end of the differential unit, the signs of the rotation speed ω, torque T and power P respectively are provided. A positive sign of the power denotes input of power, whilst a negative sign denotes power output. In all three figures, it is also considered that the vehicle is moving on a right turn 32. Therefore the rotational speed of end 8 that is connected to the external wheel, is greater compared to that of end 9 that is connected to the internal wheel. For this reason, the rotation speed of end 11 is non zero. This happens because the ring-gears of the two planetary systems have the same rotational speed while the carriers have different speeds. If the sun gears of the two planetary systems were stationary, these would have the same transmission ratio causing their carriers to have the same speed. Due to the fact that the transmission ratio of one planetary system should be greater than that of the other, the sun-gears should be rotating in opposite directions. This is achieved with the three bevel gears 20, 21 and 22.

In figure 5, the regulation shaft 11 rotates freely and the power flows from the input 1 to ring-gears, planet groups, carriers and finally from ends 8 and 9 to the wheels. It can be clearly seen that in this case the torque of the two output ends is equal, thereby yielding a behavior that is similar to the open differential unit.

In figure 6, a torque is applied by the electric machine to the end 11, with opposite direction with respect to its rotation speed and thus, the electric machine operates as generator. The power flows from input 1 and is distributed unequally to ring-gears 12 and 13. Power flows from ring-gear 12 to the planets 14 and is divided in two parts. The larger part flows to carrier 16, end 8 and ends to the external wheel. The remaining part flows to the sun-gear 18 and the bevel gears 20 and 22. There it is divided in two parts. One part flows to the end 11 and the electric machine, where it is transformed to electric energy. The remaining part flows to the bevel gear 21, the sun-gear 19 and planet groups 15. The input power flows to the ring-gear 13, it joins the planets 15 and ends to the carrier 17, the end 9 and the internal wheel. The torque that is applied to the internal wheel is higher than that applied to the external one. This behavior is similar to the limited slip differential units. The "slip ratio" that is determined for these differential units is due to the friction of the contacting surfaces, and it is simulated here by the resisting torque of the electric machine, which operates as a generator. Limited slip differentials transform energy to heat due to friction of contacting surfaces and dissipate it to the environment. The corresponding energy in the proposed differential unit is transformed to electric energy and it is being stored.

In figure 7, a torque is applied by the electric machine to the end 11 assisting its rotational speed and thus, the electric machine operates as a motor. The power flows from input 1 to the two ring-gears 12 and 13. From ring-gear 13 the power flows to planets 15 and is split in two parts. The first passes to the carrier 17, the end 9 and it leads to the internal wheel, while the second part flows to the sun-gear 19, the bevel gears 21 and 22. The electric machine consumes electric energy and transmits power to the bevel gear 22. These two power parts - which are added up in the bevel gear 22 - flow to the bevel gear 20, the sun-gear 18 and planets 14. The power flows from ring-gear 12 to planets 14, it is then added up to the power that came from sun-gear 18, it is transmitted to carrier 16 and exits from end 8 to the external wheel. The torque that is applied to the external wheel is larger than that applied to the internal one.

The proposed mechanism layout can also operate as a controlled locking differential unit. This can be achieved if the electric machine has the ability of immobilizing its shaft. Then the mechanism of bevel gears 20, 21 and 22 is immobilized and the two wheels are forced to have the same rotational speed.

## Claims

1. Differential device with controllable torque distribution means that includes an input shaft (1), a regulation shaft (11) and two output shafts (8, 9), **characterized in that** said distributing means are mutually arranged so as to distribute different torque amounts to the two output shafts (8, 9), depending on the torque that is applied to said regulation shaft (11), in particular including the combination of two similar geartrains, each one including said input, output and regulation shafts, wherein the input shafts (1) are connected together and they constitute the system input, wherein the regulation shafts (11) are connected via an inversion mechanism so that their speeds have opposite directions, so that the output shafts (8, 9) are rotatable similarly to a differential unit, and wherein the regulation shaft of the system is connected to the intermediary bevel gear of the inversion mechanism so that when the regulation shaft is rotated, one of the geartrains has a higher transmission ratio compared to the other one, while when it is rotated at the opposite direction, the ratios are inverted.

2. Differential device according to claim 1, **characterized in that** the regulation shaft (11) is connected with an electric machine (24) that has a stationary part and that is capable to operate as a motor/generator, enabling a torque of suitable direction and magnitude to be applied to said regulation shaft (11), and **in that** it (23) has a layout allowing the stationary part of said electric machine (24) to be connected with motionless elements, thereby allowing the removal or withdrawal of rotating contacts for the power transmission from and to the electric machine (24).

3. Differential device according to one of both preceding claims, **characterized in that** it includes an automatic control circuit (36) comprising a set of steering wheel angle sensor (30) and yaw rate sensor (31), a control unit (29) and an electric energy storage unit (32) for the control of the electric machine (24) that determines the required torque to the regulation shaft (11).

4. Differential device according to one of the claims 1 to 3, **characterized in that** its layout is symmetric regarding the connections of the output shafts (8, 9) with the input and regulation shaft (1, rep. 11), so that the distribution of torque is uniform for both clockwise and counterclockwise course.

5. Differential device according to one of the preceding claims 1 to 4, **characterized in that** its layout includes solely toothed wheels (gears) (4, 5, 12, 13, 14, 15, 18, 19, 20, 21, 22) for the power transmission between the shafts (1, 8, 9, 11).

6. Differential device according to the preceding claim, **characterized in that** it includes an electric machine (24) and an electric energy storage unit (32), the combination of which enables the exploitation of the energy that is produced when the electric machine (24) operates as a generator.

7. Differential device according to one of the preceding claims, **characterized in that** in case of malfunction of the electric machine/control circuit, it operates as an open differential unit, wherein equal amounts of torque are distributed to the output shafts (8, 9) when no torque is applied to the regulation shaft (11).
